# FASCICULE DE BREVET EUROPEEN

(11) **EP 0 555 766 B1**
(45) Date de publication et mention de la délivrance du brevet: **15.02.1995**
(21) Numéro de dépôt: 93101714.9
(22) Date de dépôt: 04.02.1993
(51) Int. Cl.: A47J 43/12

(54) **Accessoire pour cappuccino**
Zusatzgerät zum Bereiten von Cappuccino
Accessory for making cappuccino

(30) Priorité: 10.02.1992 FR 9201445
(43) Date de publication de la demande: 18.08.1993
(73) Titulaire: MOULINEX S.A., F-93170 Bagnolet (FR)
(72) Inventeur: Schiettecatte, Patrice Jean Cornelius, F-61000 Alençon (FR); Paquay, Justinus Theresia Agnes Catharina, F-61000 Alençon (FR)
(74) Mandataire: May, Hans Ulrich, Dr.

(56) Documents cités:
- EP-A- 0 195 750
- EP-A- 0 344 859
- DE-A- 3 942 713
- US-A- 1 678 225
- SOVIET PATENTS ABSTRACTS Section Ch, Week 8947, 10 Janvier 1990 Derwent Publications Ltd., London, GB; Class J02, AN C89-153816

## Description

L'invention concerne un accessoire s'adaptant à l'extrémité d'une tige de sortie de vapeur d'une machine à café espresso et permettant d'effectuer une émulsion crémeuse air-lait-vapeur nécessaire à la préparation d'un "cappuccino" à l'italienne. L'accessoire comprend une chambre d'aspiration en liaison avec la tige de sortie de vapeur, une première ouverture latérale qui communique avec un récipient contenant du lait, une deuxième ouverture en communication avec l'atmosphère, et une troisième ouverture par laquelle sort un premier mélange qui s'écoule dans une chambre d'émulsion comportant un premier moyen d'écoulement par lequel s'échappe l'émulsion crémeuse.

De tels accessoires pour cappuccino sont connus des documents EP-A-195 750 et EP-A-344 859. D'après ces documents, l'accessoire est constitué de plusieurs pièces rigides reliées entre elles par des joints, de moyens anti-projections et de moyens d'acheminement air-lait-vapeur complexes. Cet accessoire est encombrant, difficile à monter et à démonter et ne permet pas d'obtenir une émulsion maximum nécessaire à l'obtention d'un bon cappuccino. En outre, la construction d'un tel accessoire est difficilement envisageable dans une production en grande série où les pièces doivent être simples, peu nombreuses, pour permettre un assemblage automatique et économique.

L'invention a pour but de remédier aux inconvénients précités en réalisant un accessoire simple, économique et facile à monter sur la tige de sortie de vapeur d'une machine à café espresso.

Selon l'invention, un accessoire pour la préparation d'un cappuccino, du type exposé ci-dessus, est plus particulièrement caractérisé en ce qu'il comporte une première pièce tubulaire rigide présentant la première ouverture et le premier moyen d'écoulement, et dans laquelle est emboîtée partiellement une deuxième pièce tubulaire souple réalisée en un matériau élastique qui garantit l'étanchéité entre la première et la deuxième pièce tubulaire quand la deuxième pièce est emboîtée dans la première, cette deuxième pièce tubulaire étant adaptée à être reliée en son extrémité supérieure à la tige de sortie de vapeur et comprenant la chambre d'aspiration qui vient en liaison avec la première ouverture et la deuxième ouverture, l'espace laissé entre l'extrémité inférieure de la deuxième pièce tubulaire souple et la base de la première pièce tubulaire rigide formant la chambre d'émulsion.

Grâce à l'invention, on comprend que la construction de cet accessoire est particulièrement simple et économique puisqu'elle consiste à emboîter la pièce souple dans la pièce rigide pour obtenir , non seulement, les liaisons entre chambres et ouvertures, mais aussi l'étanchéité entre les pièces et entre la tige de sortie de vapeur et la pièce souple. En outre, un tel accessoire du fait de sa simplicité est facilement démontable, ce qui améliore son nettoyage et garantit un remontage correct par tout utilisateur. De plus, les liaisons directes entre les ouvertures et les chambres favorisent la création d'une émulsion crémeuse présentant une mousse abondante et de grande finesse. D'autres caractéristiques préferentielles sont contenues dans les revendications dépendantes 2-9.

Les caractéristiques et avantages de l'invention ressortiront d'ailleurs de la description qui va suivre, à titre d'exemple, en référence aux dessins annexés dans lesquels :

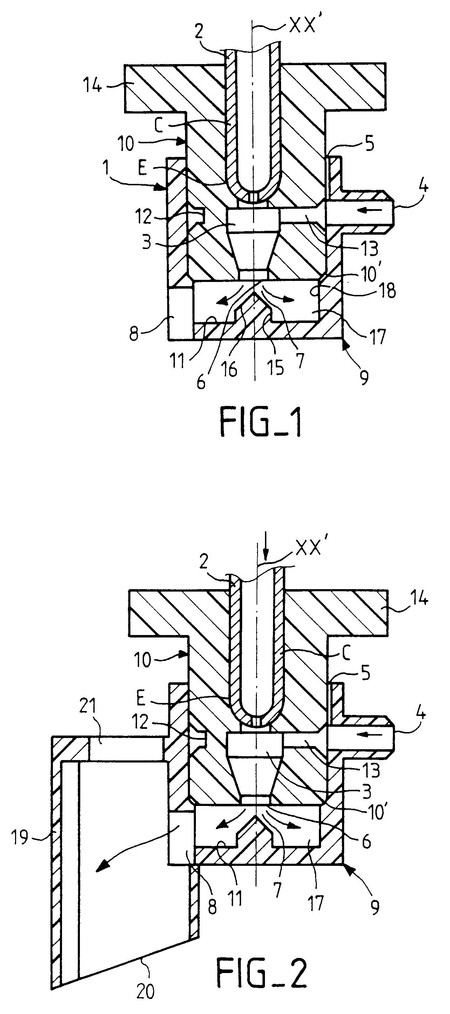

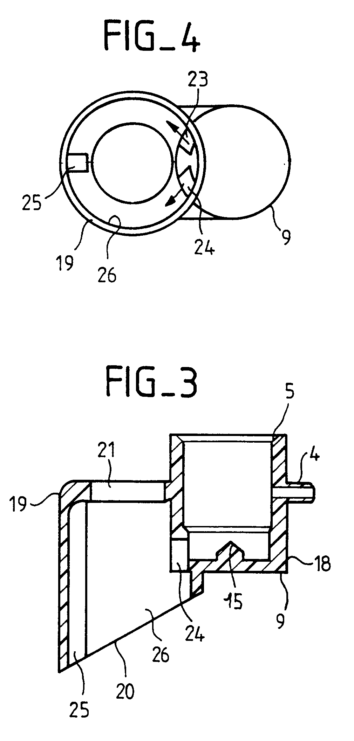

la figure 1 est une coupe verticale d'un accessoire à cappuccino constitué d'une pièce rigide et d'une pièce souple conformément à l'invention et selon un premier mode de réalisation ; la figure 2 est une coupe verticale d'un accessoire à cappuccino conformément à l'invention et selon un deuxième mode de réalisation ; la figure 3 est une coupe verticale d'une pièce rigide d'un accessoire à cappuccino conformément à l'invention et selon un troisième mode de réalisation ; la figure 4 est une vue de dessous de l'accessoire de la figure 3.

Selon la figure 1, un accessoire 1 pour la préparation d'une émulsion crémeuse air-lait-vapeur pour confectionner un "cappuccino" est monté à l'extrémité d'une tige de sortie de vapeur 2 d'une machine à café espresso non représentée. L'accessoire 1 comprend une chambre d'aspiration 3 qui est en liaison avec : la tige de sortie de vapeur 2, une première ouverture latérale 4 qui communique avec un récipient non représenté contenant du lait, une deuxième ouverture latérale 5 en communication avec l'atmosphère, et une troisième ouverture 6 par laquelle sort un premier mélange air-lait-vapeur qui s'écoule dans une chambre d'émulsion 7 comportant un premier moyen d'écoulement 8 par lequel s'échappe l'émulsion crémeuse.

Selon l'invention, l'accessoire 1 comporte une première pièce tubulaire rigide 9 présentant la première ouverture 4 et le premier moyen d'écoulement 8 et recevant partiellement une deuxième pièce tubulaire souple 10 réalisée en un matériau élastique et reliée en son extrémité supérieure à la tige de sortie de vapeur 2. La deuxième pièce tubulaire souple 10 comprend la chambre d'aspiration 3 en liaison avec la première ouverture 4 et la deuxième ouverture 5. L'espace laissée entre l'extrémité inférieure de la deuxième pièce tubulaire souple 10 et la base 11 de la première pièce tubulaire rigide 9 forme la chambre d'émulsion 7.

La tige de sortie de vapeur 2 de la machine à café espresso est enfoncée dans un logement C, réalisé dans la partie centrale de la deuxième pièce 10, pour venir en butée contre un premier épaulement E de manière à ne pas obturer la liaison de la chambre 3 avec la première ouverture latérale 4 par laquelle est amenée le mélange air-lait.

La paroi interne 18 de la pièce rigide 9 comporte un épaulement 10' sur lequel vient en butée l'extrémité inférieure de la pièce souple 10. De cette manière, la première pièce tubulaire rigide 9 assure un autoserrage sur la deuxième pièce tubulaire souple 10 de façon à garantir une bonne étanchéité entre les différentes ouvertures. La deuxième pièce tubulaire souple 10 comporte également une gorge circulaire 12 creusée dans sa surface latérale, et dans laquelle débouche un trou 13, par exemple, perpendiculaire à un axe longitudinal XX' de ladite deuxième pièce tubulaire souple 10, ladite gorge 12 étant refermée par la paroi interne 18 de la pièce rigide 9 met en liaison la chambre d'aspiration 3 avec la première ouverture 4. Après encastrement complet de la deuxième pièce tubulaire souple 10 dans la première pièce tubulaire rigide 9, la gorge circulaire 12 se trouve placé automatiquement, en vis à vis de la première ouverture 4 communiquant avec le récipient contenant du lait. Pour obtenir une réalisation économique mais fiable, la première pièce tubulaire rigide 9 est, par exemple, en polyacètal et la deuxième pièce tubulaire souple 10 est, par exemple, en silicone. Tout autre matériau souple ou rigide résistant à la chaleur peut également être utilisé.

Dans l'exemple de réalisation décrit à la figure 1, la deuxième ouverture 5 servant de prise d'air est, par exemple, formée par un sillon calibré de section comprise entre 0,1 et 0,3mm², pratiqué dans la paroi interne latérale 18 de la première pièce tubulaire rigide 9 et interrompant la surface de contact entre les deux pièces 9 et 10.

La deuxième ouverture 5 d'admission d'air peut, dans un autre exemple de réalisation non représenté, être réalisé dans la deuxième pièce tubulaire 10.

L'extrémité supérieure de la deuxième pièce tubulaire souple 10 comporte un moyen de préhension, par exemple, une protubérance annulaire 14 réalisée à la périphérie extérieure de l'extrémité supérieure de la deuxième pièce 10. Ce moyen de préhension facilite le montage et le démontage de l'accessoire ainsi formé. La base 11 de la première pièce tubulaire rigide 9 comporte un bossage 15 situé en regard de l'ouverture 6 et présentant au moins une arrête vive, par exemple une pointe conique 16. Ce bossage est suivi d'une zone d'accumulation 17 du mélange crémeux qui s'écoule par le premier moyen d'écoulement 8 constitué d'au moins un trou pratiqué dans la paroi latérale 18. L'accessoire ainsi décrit est monté sur la tige de sortie de vapeur 2 d'une machine à café espresso et peut fonctionner dès que le robinet de vapeur de la machine est ouvert. De cette manière la vapeur jaillissant de la tige 2 aspire et entraîne, par effet venturi, l'air issu de la deuxième ouverture 5 et le lait issu de la première ouverture 4 qui communique avec un récipient contenant du lait. Un premier mélange air-lait-vapeur se forme dans la chambre d'aspiration 3. La chambre d'aspiration 3 a, par exemple, une forme tronconique inversée de manière, d'une part, à canaliser le premier mélange sur le bossage 15 de la pièce rigide 10, et d'autre part, à favoriser l'aspiration dans ladite chambre. Ledit premier mélange est projeté dans la chambre d'émulsion 7 sur la pointe de cône 16 de la base 11 de la première pièce tubulaire rigide 9. De ce fait, le jet du premier mélange est brisé et éclaté en une multitude de gouttelettes formant un nouveau jet mince et de surface large. Ce nouveau jet vient frapper la base 11 et la paroi latérale 18 de la première pièce tubulaire rigide 9 et se brasse fortement avec une partie du mélange encore retenu dans la zone d'accumulation 17 de façon à créer une bonne émulsion. De cette manière un mélange crémeux composé d'une mousse fine et abondante s'écoule par le premier moyen d'écoulement 8.

Selon la figure 2 dont certaines références désignent les mêmes éléments que ceux représentés sur la figure 1 l'accessoire 1 pour la préparation d'un mélange crémeux comporte au moins un moyen anti-éclaboussure 19 positionné à la sortie du premier moyen d'écoulement 8. Dans un autre exemple de réalisation non représenté, deux moyens antiéclaboussures sont fixés sur la pièce rigide 9 et permettent d'obtenir ainsi un répartiteurs deux tasses. Dans l'exemple de réalisation décrit, le moyen anti-éclaboussure 19 est, par exemple, une chambre cylindrique solidaire de la première pièce tubulaire rigide 9. Ladite chambre 19 comporte un orifice d' évacuation de mousse 20 par lequel s'échappe l'émulsion crémeuse nécessaire au cappuccino et positionné, par exemple, dans la partie inférieure de ladite chambre 19 ainsi qu'un trou d'évacuation d'excès de vapeur 21 positionné, par exemple, dans sa partie supérieure. La partie inférieure de l'orifice d'évacuation 20 a par exemple, une forme biseautée afin de favoriser le bon écoulement de l'émulsion crémeuse en un seul endroit.

Selon les figures 3 et 4 dont certaines références désignent les mêmes éléments que ceux représentés à la figure 1, la première pièce tubulaire rigide 9 comporte, par exemple, deux trous latéraux 23 et 24 servant de moyen d'écoulement et orientés selon une direction tangentielle à la paroi interne latérale 26 de la chambre 19. La chambre 19 comporte un plot transversal 25 positionné à l'intérieur de la paroi latérale 26 de la chambre 19, s'étendant sensiblement sur toute la hauteur du moyen 19 et placé à l'opposé des trous latéraux 23 et 24. Ainsi, le mélange crémeux air-lait-vapeur issu des trous obliques 23 et 24 suit un mouvement circulaire représenté par les flèches sur la figure 3, et vient heurter le plot 25. Ledit mélange crémeux s'écoule le long du plot 25 et est ainsi récupéré dans une tasse ou tout autre récipient sans éclaboussures. De cette manière, le mouvement imposé au mélange crémeux favorise la séparation de la vapeur de l'émulsion crémeuse. Un tel accessoire permet également de chauffer toute sorte de liquide.

## Revendications

1. Accessoire pour la préparation d'une émulsion crémeuse air-lait-vapeur pour confectionner un cappuccino, destiné à être monté sur l'extrémité d'une tige de sortie de vapeur (2) d'une machine à café espresso et comprenant une chambre d'aspiration (3) en liaison avec la tige de sortie de vapeur (2), une première ouverture latérale (4) qui communique avec un récipient contenant du lait, une deuxième ouverture (5) en communication avec l'atmosphère, et une troisième ouverture (6) par laquelle sort un premier mélange qui s'écoute dans une chambre d'émulsion (7) comportant un premier moyen d'écoulement (8) par lequel s'échappe ladite émulsion crémeuse,
**caractérisé en ce qu'il** comporte une première pièce tubulaire rigide (9) présentant la première ouverture (4) et le premier moyen d'écoulement (8), et dans laquelle est emboîtée partiellement une deuxième pièce tubulaire souple (10) réalisée en un matériau élastique qui garantit l'étanchéité entre la première (9) et la deuxième pièce tubulaire (10) quand la deuxième pièce est emboîtée dans la première, cette deuxième pièce tubulaire (10) étant adaptée à être reliée en son extrémité supérieure à la tige de sortie de vapeur (2) et comprenant la chambre d'aspiration (3) qui vient en liaison avec la première ouverture (4) et la deuxième ouverture (5), l'espace laissé entre l'extrémité inférieure de la deuxième pièce tubulaire souple (10) et la base (11) de la première pièce tubulaire rigide (9) formant la chambre d'émulsion (7).

2. Accessoire pour la préparation d'une émulsion crémeuse, selon la revendication 1,
**caractérisé en ce que** la première ouverture latérale (4) de la première pièce tubulaire (9) est en liaison avec la chambre d'aspiration (3) par un trou (13) pratiqué dans la deuxième pièce tubulaire (10), transversalement à t'axe longitudinal (XX') de ladite deuxième pièce tubulaire (10).

3. Accessoire pour la préparation d'une émulsion crémeuse, selon la revendication 2,
**caractérisé en ce que** la paroi interne (18) de la première pièce tubulaire (9) comporte un épaulement (10') sur lequel vient en butée l'extrémité de la deuxième pièce tubulaire (10), de telle sorte que le trou (13) débouchant dans une gorge circulaire (12) creusée dans la deuxième pièce tubulaire (10), ladite gorge soit disposée, après emboîtement de ta deuxième pièce tubulaire (10) dans la première pièce tubulaire (9), en vis à vis de la première ouverture (4) de la première pièce tubulaire (9).

4. Accessoire pour la préparation d'une émulsion crémeuse, selon l'une des revendications 1 à 3,
**caractérisé en ce que** la deuxième ouverture (5) correspondant à une prise d'air, est un sillon calibré disposé parallèlement à l'axe longitudinal (XX') de la deuxième pièce tubulaire (10) et pratiqué dans la paroi interne latérale (18) de la première pièce tubulaire (9) et s'étendant entre l'extrémité supérieure de ladite première pièce tubulaire (9) et la première ouverture (4).

5. Accessoire pour la préparation d'une émulsion crémeuse, selon l'une quelconque des revendications précédentes,
**caractérisé en ce que** la deuxième pièce tubulaire (10) comporte un moyen de préhension (14) réalisé sur son extrémité supérieure.

6. Accessoire pour la préparation d'une émulsion crémeuse, selon l'une quelconque des revendications précédentes,
**caractérisé en ce que** la base (11) de la première pièce tubulaire (9) comporte un bossage (15) situé en regard de la troisième ouverture (6).

7. Accessoire pour la préparation d'une émulsion crémeuse, selon la revendication 6,
**caractérisé en ce que** le bossage (15) présente la forme d'une pointe conique (16).

8. Accessoire pour la préparation d'une émutsion crémeuse, selon l'une quelconque des revendications précédentes,
**caractérisé en ce que** le premier moyen d'écoulement (8) de la première pièce tubulaire (9) débouche dans au moins une chambre anti-éclaboussures (19) solidaire de ta première pièce tubulaire (9) et comprenant, dans sa partie supérieure, un trou (21) d'évacuation de vapeur et, dans sa partie inférieure, un orifice (20) d'évacuation de l'émulsion crémeuse.

9. Accessoire pour la préparation d'une émulsion crémeuse, selon l'une quelconque des revendication précédentes,
**caractérisé en ce que** la première pièce tubulaire rigide (9) est en polyacétal et ta deuxième pièce tubulaire souple (10) est en silicone.

## Claims

1. Accessory for the preparation of a creamy air/milk/steam emulsion for making a cappuccino, intended to be fitted to the end of a steam outlet nozzle (2) on an espresso coffee machine and comprising a suction chamber (3) connected to the steam outlet nozzle (2), a first lateral opening (4) communicating with a receptacle containing milk, a second opening (5) communicating with the atmosphere, and a third opening (6) through which a first mixture emerges and flows into an emulsion chamber (7) which has a first flow means (8) through which the said creamy emulsion escapes, characterised in that it includes a first, rigid, tubular piece (9) having the first opening (4) and the first flow means (8), and in which is partially fitted a second, flexible, tubular piece (10) produced in an elastic material which guarantees a seal between the first (9) and second (10) tubular piece when the second piece is fitted in the first, this second tubular piece (10) being suitable for being connected at its top end to the steam outlet nozzle (2) and comprising the suction chamber (3) which is connected to the first opening (4) and the second opening (5), the space left between the bottom end of the second, flexible, tubular piece (10) and the base (11) of the first, rigid, tubular piece (9) forming the emulsion chamber (7).

2. Accessory for the preparation of a creamy emulsion, according to Claim 1, characterised in that the first lateral opening (4) in the first tubular piece (9) is connected to the suction chamber (3) by means of a hole (13) formed in the second tubular piece (10), transversely to the tongitudinal axis (XX') of the said second tubular piece (10).

3. Accessory for the preparation of a creamy emulsion, according to Claim 2, characterised in that the internal wall (18) of the first tubular piece (9) has a shoulder (10') against which the end of the second tubular piece (10) comes into abutment, so that, the hole (13) opening out into a circular groove (12) formed in,the second tubular piece (10), the said groove is disposed, once the second tubular piece (10) has been fitted in the first tubular piece (9), opposite the first opening (4) in the first tubular piece (9).

4. Accessory for the preparation of a creamy emulsion, according to one of Claims 1 to 3, characterised in that the second opening (5) corresponding to an air inlet is a calibrated recess disposed parallel to the longitudinal axis (XX') of the second tubular piece (10) and formed in the internal lateral wall (18) of the first tubular piece (9) and extending between the top end of the said first tubular piece (9) and the first opening (4).

5. Accessory for the preparation of a creamy emulsion, according to any one of the preceding claims, characterised in that the second tubular piece (10) has a gripping means (14) produced at its top end.

6. Accessory for the preparation of a creamy emulsion, according to any one of the preceding claims, characterised in that the base (11) of the first tubular piece (9) has a projection facing the third opening (6).

7. Accessory for the preparation of a creamy emulsion, according to Claim 6, characterised in that the projection (15) has the shape of a conical point.

8. Accessory for the preparation of a creamy emulsion, according to any one of the preceding claims, characterised in that the first flow means (8) of the first tubular piece (9) opens out into at least one anti-spattering chamber (19) integral with the first tubular piece (9) and comprising, in its top part, a steam discharge hole (21) and, in its bottom part, a discharge orifice (20) for the creamy emulsion.

9. Accessory for the preparation of a creamy emulsion, according to any one of the preceding claims, characterised in that the first, rigid, tubular piece (9) is produced from polyacetal, and the second, flexible, tubular piece (10) is produced from silicone.

## Patentansprüche

1. Zusatzgerät für die Herstellung einer cremigen Emulsion Luft-Milch-Dampf zur Zubereitung eines Cappuccino, das zum Anbringen an einem Ende einer rohrförmigen Dampfaustrittsdüse (2) einer Espresso-Kaffeemaschine bestimmt ist und eine Ansaugkammer (3), die in Verbindung mit der Dampfaustrittsdüse (2) steht, eine erste seitliche Öffnung (4), die mit einem Milch enthaltenden Gefäß in Verbindung steht, eine zweite Öffnung (5), die mit der Atmosphäre in Verbindung steht, und eine dritte Öffnung (6) aufweist, durch welche ein erstes Gemisch austritt, das in eine Emulsionskammer (7) strömt, die eine erste Ausflußvorrichtung (8) aufweist, durch welche die cremige Emulsion abläuft, **dadurch gekennzeichnet**, daß es einen starren ersten rohrförmigen Teil (9) aufweist, der die erste Öffnung (4) und die erste Ausflußvorrichtung (8) aufweist und in den teilweise ein elastischer zweiter rohrförmiger Teil (10) eingesetzt ist, der aus einem elastischen Material besteht, das die Abdichtung zwischen dem ersten (9) und dem zweiten rohrförmigen Teil (10) gewährleistet, wenn der zweite Teil in den ersten Teil eingesetzt ist, wobei der zweite rohrförmige Teil (10) für die Verbindung seines oberen Endes mit der rohrförmigen Dampfaustrittsdüse (2) ausgebildet ist und die Ansaugkammer (3) enthält, die mit der ersten Öffnung (4) und der zweiten Öffnung (5) in Verbindung gebracht wird, wobei der zwischen dem unteren Ende des elastischen zweiten rohrförmigen Teils (10) und dem Boden (11) des starren ersten rohrförmigen Teils (9) belassene Zwischenraum die Emulsionskammer (7) bildet.

2. Zusatzgerät zur Herstellung einer cremigen Emulsion nach Anspruch 1, **dadurch gekennzeichnet**, daß die erste seitliche Öffnung (4) des ersten rohrförmigen Teils (9) mit der Ansaugkammer (3) durch eine Öffnung (13) in Verbindung steht, die im zweiten rohrförmigen Teil (10) quer zur Längsachse (XX') des zweiten rohrförmigen Teils (10) ausgebildet ist.

3. Zusatzgerät zur Herstellung einer cremigen Emulsion nach Anspruch 2, **dadurch gekennzeichnet**, daß die Innenwand (18) des ersten rohrförmigen Teils (9) eine Schulter (10') aufweist, gegen welche das Ende des zweiten rohrförmigen Teils (10) anschlägt, so daß eine im zweiten rohrförmigen Teil (10) ausgehöhlte Ringnut (12), in welcher die Bohrung (13) mündet, nach Einsetzen des zweiten rohrförmigen Teils (10) in den ersten rohrförmigen Teil (9) gegenüber der ersten Öffnung (4) des rohrförmigen Teils (9) angeordnet ist.

4. Zusatzgerät zur Herstellung einer cremigen Emulsion nach einem der Ansprüche 1 bis 3, **dadurch gekennzeichnet**, daß die zweite Öffnung (5), die einer Lüftungsöffnung entspricht, eine parallel zur Längsachse (XX') des zweiten rohrförmigen Teils (10) angeordnete und in der seitlichen Innenwand (18) des ersten rohrförmigen Teils (9) ausgebildete kalibrierte Rille ist, die sich zwischen dem oberen Ende des ersten rohrförmigen Teils (9) und der ersten Öffnung (4) erstreckt.

5. Zusatzgerät zur Herstellung einer cremigen Emulsion nach einem der vorangehenden Ansprüche, **dadurch gekennzeichnet**, daß der zweite rohrförmige Teil (10) einen an seinem oberen Ende ausgebildeten Griff (14) aufweist.

6. Zusatzgerät zur Herstellung einer cremigen Emulsion nach einem der vorangehenden Ansprüche, **dadurch gekennzeichnet**, daß der Boden (11) des ersten rohrförmigen Teils (9) einen gegenüber der dritten Öffnung (6) angeordneten Buckel (15) aufweist.

7. Zusatzgerät zur Herstellung einer cremigen Emulsion nach Anspruch 6, **dadurch gekennzeichnet**, daß der Buckel (15) die Form einer Kegelspitze (16) aufweist.

8. Zusatzgerät zur Herstellung einer cremigen Emulsion nach einem der vorangehenden Ansprüche, **dadurch gekennzeichnet**, daß die erste Ausflußvorrichtung (8) des ersten rohrförmigen Teils (9) in mindestens einer Spritzschutz-Kammer (19) mündet, die mit dem ersten rohrförmigen Teil (9) fest verbunden ist und in ihrem oberen Teil eine Dampf-Austrittsöffnung (21) und in ihrem unteren Teil eine Öffnung (20) für den Ablauf der cremigen Emulsion aufweist.

9. Zusatzgerät zur Herstellung einer cremigen Emulsion nach einem der vorangehenden Ansprüche, **dadurch gekennzeichnet**, daß der starre erste rohrförmige Teil (9) aus Polyacetal und der elastische zweite rohrförmige Teil (10) aus Silicon ist.
